# EUROPÄISCHE PATENTSCHRIFT

(11) **EP 0 919 733 B1**
(45) Veröffentlichungstag und Bekanntmachung des Hinweises auf die Patenterteilung: **23.07.2003**
(21) Anmeldenummer: 98120419.1
(22) Anmeldetag: 28.10.1998
(51) Int. Cl.: F16B 13/14, F16B 12/04, E05D 5/02, F16B 12/24

(54) **Dübel zur Befestigung von Möbelbeschlagteilen**
Dowel for attaching parts of furniture fittings
Cheville de fixation pour éléments de garniture pour meubles

(30) Priorität: 28.11.1997 DE 29721119 U
(43) Veröffentlichungstag der Anmeldung: 02.06.1999
(73) Patentinhaber: Arturo Salice S.p.A., I-22060 Novedrate (Como) (IT)
(72) Erfinder:
(74) Vertreter: Laufhütte, Dieter, Dr.-Ing.

(56) Entgegenhaltungen:
- DE-U- 8 617 232
- US-A- 4 681 477

## Beschreibung

Die Erfindung betrifft einen Dübel zur Befestigung von Möbelbeschlagteilen nach dem Oberbegriff des Anspruchs 1.

Grundsätzlich sind aus der DE 27 48 118 und der DE 28 12 458 bereits Dübel bekannt, die über einen Klebstoff in die entsprechende Montagebohrung eingeklebt werden. Um eine besonders feste Verankerung im Möbelteil zu erzielen, ist es aus der DE 27 48 118 A bereits bekannt, eine Befestigungsplatte mit mindestens einem Ansatz zu versehen, in dessen Hohlraum sich ein Klebstoff derart befindet, daß er durch einen einführbaren Stempel aus dem Ansatz hinausgepreßt wird. Wird der Stempel als Einschlagstift oder als Gewindestift ausgeführt, so ist die Befestigungsplatte in ihrem Aufbau kompliziert und teuer. Ihre Montage ist vergleichsweise zeitaufwendig.

Aufgabe der vorliegenden Erfindung ist es, einen Dübel zur Befestigung von Möbelbeschlagteilen zu schaffen, der einfach aufgebaut ist und kostengünstig zu montieren ist.

Erfindungsgemäß wird diese Aufgabe dadurch gelöst, daß beim gattungsgemäßen Dübel der Rauminhalt der inneren Aussparung bei dem Montagevorgang so weit verringerbar ist, daß durch die Verformung des Dübels die Kapsel zerstörbar und der Klebstoff durch Verbindungskanäle oder Schlitze zur Oberfläche des Dübels verdrängbar ist. Aufgrund der erfindungsgemäßen Ausbildung des Dübels kann dieser in besonders einfacher Art und Weise montiert werden. Der Dübel wird aufgrund des Zusammenpressens beim Eindrücken in die Montagebohrung eines Möbelteils die in seinem Inneren angeordnete Klebstoffkapsel zerstören, so daß der Klebstoff austreten kann. Der Dübel wird also zusätzlich zu dem Preßsitz noch über eine stoffschlüssige Klebeverbindung mit dem Möbelteil verbunden. Bei dem erfindungsgemäßen Dübel ist es nun nicht mehr notwendig, daß ein zusätzlicher Einschlagstift oder Gewindestift vorgesehen werden muß, wie dies im Stand der Technik der Fall war.

Vorteilhafte Ausgestaltungen des erfindungsgemäßen Dübels ergeben sich aus den sich an den Hauptanspruch anschließenden Unteransprüchen 2 bis 6. Demnach kann die Aussparung nahe dem freien Ende des Dübels angeordnet sein, wobei diese Aussparung von einem zum freien Ende des Dübels hin offenen, diagonal verlaufenden Schlitz durchsetzt ist.

Vorzugsweise besteht der Dübel aus einem flexiblen Material, vorzugsweise einem Kunststoff mit hinreichender Elastizität. Hierdurch ist sichergestellt, daß der Dübel bereits mittels eines Preßsitzes in der Montagebohrung festsitzt, während der Klebstoff noch aushärtet.

Der Dübel kann, wie an sich bekannt, auf Umfang angeschrägte Dübelzähne aufweisen, die nach der Lehre der hier vorliegenden Erfindung im montierten Zustand an der Wandung der Montageöffnung anliegen und deren Außenumfang größer bemessen ist als der Umfang der Montageöffnung.

Der Umfang des Dübels bzw. der äußere Umfang der Dübelzähne kann dabei insbesondere in Querrichtung zum diagonal verlaufenden Schlitz um so viel größer sein als der Umfang der Montageöffnung, daß im montierten Zustand die seitlichen Wandungen des Schlitzes im wesentlichen zusammenliegen.

Vorteilhaft kann der Dübel auch von mehreren Schlitzen diagonal durchsetzt sein, die sich im Bereich der inneren Aussparung schneiden.

Besonders vorteilhaft ist es, eine Montageplatte für ein Möbelbeschlagteil unmittelbar mit den erfindungsgemäßen Dübeln zu versehen. Hierbei können die Dübel einstückig mit der Montageplatte ausgebildet sein. Eine derartige Montageplatte läßt sich durch einfaches Eindrücken in die entsprechend vorgesehenen Montageöffnungen ohne weitere Manipulation mit Werkzeugen einsetzen.

Weitere Einzelheiten und Vorteile der Erfindung ergeben sich aus einem anhand der Zeichnung dargestellten Ausführungsbeispiel. Es zeigen:
- Fig. 1:: Einen Schnitt durch eine Möbelplatte mit entsprechenden Montageöffnungen und einer Befestigungsplatte mit den Dübeln entsprechend einer Ausführungsform der Erfindung,
- Fig. 2:: eine Seitenansicht (teilweise geschnitten) auf die Befestigungsplatte gemäß Fig. 1 und
- Fig. 3:: eine teilweise geschnittene Ansicht der montierten Möbelplatte entsprechend Fig. 1.

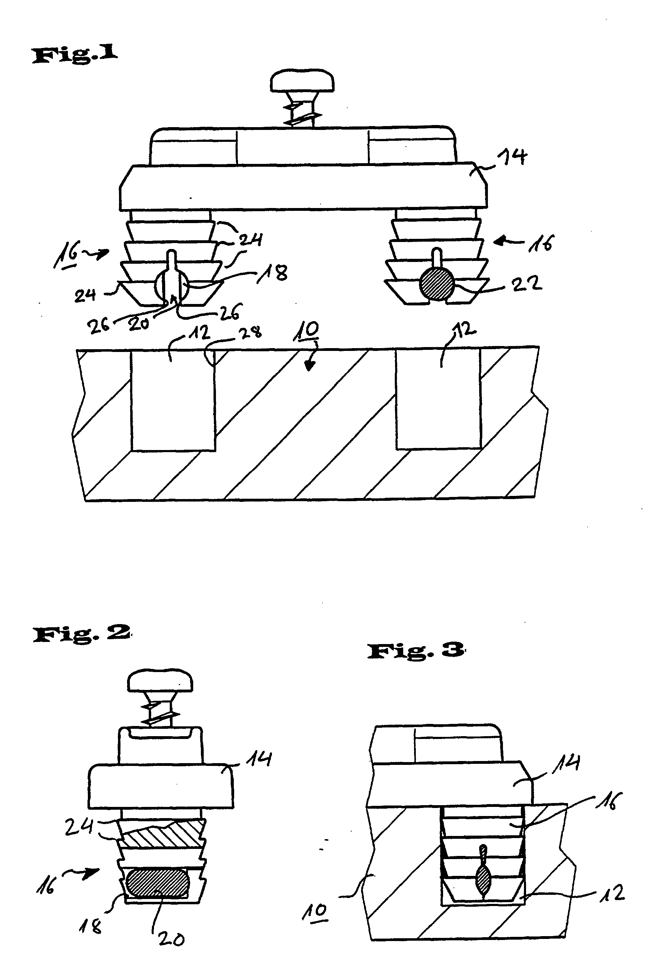

In Fig. 1 ist eine Platte 10 eines Möbelkorpus mit zwei sacklochartigen Montagebohrungen 12 versehen. In diese Montagebohrungen ist eine Montageplatte 14 für ein Möbelbeschlagteil, die ebenfalls in Fig. 1 dargestellt ist, einsetzbar. An dem plattenförmigen Beschlagteil 14 sind einstückig zwei Dübel 16 angeformt. Der Dübel 16 weist eine zu einer Seite hin offen mündende innere Aussparung 18 auf, die von einem diagonal durch den Dübel verlaufenden Schlitz 20, der zum freien Ende des Dübels 16 hin offen ist, geschnitten wird. Im linken Dübel gemäß Fig. 1 ist diese Aussparung 18 leer, während sie im rechten Dübel der Fig. 1 mit einer mit Klebstoff gefüllten Kapsel 22 ausgefüllt ist.

Die Dübel 16 weisen angeschrägte Verzahnungen 24 auf, die in Einsteckrichtung des Dübels 16 angeschrägt sind und somit ein Zentrieren des Einsteckens des Dübels in eine Montagebohrung 12 ermöglichen. Der Außenumfang der Verzahnung 24 ist größer bemessen als der Umfang der Montagebohrung, so daß beim Einstecken der Dübel 16 in die Montagebohrung 12 die durch den Schlitz 20 voneinander getrennten Teile des Dübels 16 unter Verengung des Spaltes 20 zusammengepreßt werden, wie dies in Fig. 3 in montierter Stellung gezeigt ist. Aufgrund der seitlichen Anpreßkraft wird die mit Klebstoff gefüllte Kapsel 22 zerstört und der Klebstoff kann durch den Schlitz 20 und das offene Ende der Aussparung 18 austreten. Der nominale Dübeldurchmesser kann grundsätzlich dem Durchmesser von üblichen einpreßbaren Dübeln entsprechen. Er ist also nur geringfügig größer als der Bohrungsdurchmesser der Montageöffnung 12. Hierdurch ist ein leichtes Einsetzen des Dübels sichergestellt, wobei die Verringerung des Rauminhalts der inneren Aussparung aber so groß ist, daß die Kapsel 22 sicher zerstört wird.

Zweckmäßigerweise sind die unteren seitlichen Wandungen 26 des Schlitzes 20 so weit voneinander entfernt, daß sie im montierten Zustand aneinanderliegen (vgl. Fig. 3) und somit ebenfalls eine ausreichende Preßkraft der Dübelzähne 24 gegen die Wandung 28 der Montageöffnung 12 ermöglichen. Aus der seitlichen Darstellung der Fig. 2 ist die Anordnung der Aussparung 18, die zur einen Seite des Dübels hin offen ist, verdeutlicht. Aufgrund dieser seitlichen Zugänglichkeit der inneren Aussparung 18 kann die mit Klebstoff gefüllte Kapsel 22 einfach in den Dübel eingesetzt werden.

Mit der hier vorliegenden Erfindung wird ein einfach aufgebauter und besonders einfach zu montierender Dübel zur Befestigung von Möbelbeschlagteilen an die Hand gegeben. Grundsätzlich kann ein derartiger Dübel nicht nur zur Befestigung von Möbelbeschlagteilen dienen. Auch jeder andere Dübel, der fest mit einer Montageöffnung verbunden werden soll, kann in dieser Form ausgebildet sein.

## Patentansprüche

1. Dübel (16) zur Befestigung von Möbelbeschlagteilen mit einer inneren Aussparung (18) zur Aufnahme von Klebstoff, der von einer zerstörbaren Kapsel (22) umgeben ist,
**dadurch gekennzeichnet,**
**daß** der Rauminhalt der inneren Aussparung (18) bei dem Montagevorgang so weit verringerbar ist, daß durch die Verformung des Dübels (16) die Kapsel (22) zerstörbar und der Klebstoff durch Verbindungskanäle oder Schlitze (20) zur Oberfläche des Dübels (16) verdrängbar ist.

2. Dübel (16) nach Anspruch 1, **dadurch gekennzeichnet, daß** die Aussparung (18) nahe seinem freien Ende angeordnet ist und daß diese von einem zum freien Ende des Dübels hin offenen, diagonal verlaufenden Schlitz (20) durchsetzt ist.

3. Dübel (16) nach Anspruch 1 oder 2, **dadurch gekennzeichnet, daß** er aus einem flexiblen Material, vorzugsweise einem Kunststoff mit hinreichender Elastizität, gefertigt ist.

4. Dübel (16) nach einem der Ansprüche 1 bis 3, **dadurch gekennzeichnet, daß** er auf Umfang angeschrägte Dübelzähne (24) aufweist, die sich im montierten Zustand an der Wandung (28) der Montageöffnung anliegen und deren Außenumfang größer bemessen ist als der Umfang der Montageöffnung.

5. Dübel (16) nach einem der Ansprüche 1 bis 4, **dadurch gekennzeichnet, daß** der Umfang des Dübels (16) bzw. der äußere Umfang der Dübelzähne (24) insbesondere in Querrichtung zum diagonal verlaufenden Schlitz (20) um so viel größer ist als der Umfang der Montageöffnung (12), daß im montierten Zustand die seitlichen Wandungen (26) des Schlitzes im wesentlichen zusammenliegen.

6. Dübel (16) nach einem der vorangehenden Ansprüche, **dadurch gekennzeichnet, daß** dieser von mehreren Schlitzen (20) diagonal durchsetzt ist, die sich im Bereich der inneren Aussparung (18) schneiden.

7. Montageplatte (14) für ein Möbelbeschlagteil mit einem Dübel (16) nach einem der Ansprüche 1 bis 6.

8. Montageplatte (14) nach Anspruch 7, **dadurch gekennzeichnet, daß** der mindestens eine Dübel (16) einstückig mit der Montageplatte (14) ausgebildet ist.

## Claims

1. A dowel (16) for attaching parts of furniture fittings, having an interior recess (18) for housing adhesive that is enclosed in a destructible capsule (22),
**characterised in that**
the spatial content of the interior recess (18) may be reduced during the assembly operation to such an extent that the capsule (22) is destructible by deformation of the dowel (16) and the adhesive may be forced to the surface of the dowel (16) through connecting channels or slits (20).

2. The dowel (16) according to claim 1, **characterised in that** the interior recess (18) is arranged close to its distal end and that said recess is traversed by a diagonally extending slit (20) that is open towards the distal end of the dowel.

3. The dowel (16) according to either of claims 1 or 2, **characterised in that** it is made from a flexible material, preferably a plastic with sufficient elasticity.

4. The dowel (16) according to any of claims 1 to 3, **characterised in that** it is furnished with circumferentially inclined dowel ridges (24), which in the assembled condition lie against the wall (28) of the mounting hole, and the outer circumference of which is larger than the circumference of the mounting hole.

5. The dowel (16) according to any of claims 1 to 4, **characterised in that**, particularly perpendicularly to the diagonally extending slit (20), the circumference of the dowel (16), that is the outer circumference of the dowel ridges (24) is greater than the circumference of the mounting hole (12) to such a degree that in the assembled condition the lateral walls (26) of the slit are essentially touching one another.

6. The dowel (16) according to any of the previous claims, **characterised in that** it is diagonally traversed by multiple slits (20), which intersect in the area of the interior recess (18).

7. An assembly panel (14) for a furniture fitting having a dowel according to one of claims 1 to 6.

8. The assembly panel (14) according to claim 7, **characterised in that** the at least one dowel (16) is conformed as a single part with the assembly panel (14).

## Revendications

1. Cheville (16) pour la fixation d'éléments de garniture de meuble avec un évidement (18) intérieur pour le logement de la colle, qui est entourée par une capsule (22) destructible,
**caractérisée en ce que**
le volume de l'évidement intérieur (18) peut être réduit lors de l'opération de montage assez largement pour que la capsule (22) puisse être détruite par la déformation de la cheville (16) et que la colle puisse être déplacée par des canaux de liaison ou des fentes (20) vers la surface de la cheville (16).

2. Cheville (16) selon la revendication 1, **caractérisée en ce que** l'évidement (18) est disposé à proximité de son extrémité libre et qu'il est traversé par une fente (20) ouverte en direction de l'extrémité libre de la cheville et agencée en diagonale.

3. Cheville (16) selon la revendication 1 ou 2, **caractérisée en ce qu'**elle est fabriquée dans un matériau souple, de préférence un plastique avec une élasticité suffisante.

4. Cheville (16) selon l'une quelconque des revendications 1 à 3, **caractérisée en ce qu'**elle présente des dents de cheville (24) chanfreinées sur le pourtour qui s'appuient dans l'état monté sur la paroi (28) de l'orifice de montage et dont le pourtour extérieur est plus grand que le pourtour de l'orifice de montage.

5. Cheville (16) selon l'une quelconque des revendications 1 à 4, **caractérisée en ce que** le pourtour de la cheville (16) ou le pourtour extérieur des dents de cheville (24), en particulier dans le sens transversal à la fente (20) agencée en diagonale, est d'autant plus grand que le pourtour de l'orifice de montage (12) que les parois latérales (26) de la fente sont sensiblement ensemble dans l'état monté.

6. Cheville (16) selon l'une quelconque des revendications précédentes, **caractérisée en ce que** celle-ci est traversée en diagonale par plusieurs fentes (20), qui se coupent dans la zone de l'évidement (18) intérieur.

7. Plaque de montage (14) pour un élément de garniture de meuble avec une cheville (16) selon l'une quelconque des revendications 1 à 6.

8. Plaque de montage (14) selon la revendication 7, **caractérisée en ce que** la au moins une cheville (16) est conçue d'une seule pièce avec la plaque de montage (14).
